# EUROPÄISCHE PATENTSCHRIFT

(11) **EP 1 968 815 B1**
(45) Veröffentlichungstag und Bekanntmachung des Hinweises auf die Patenterteilung: **11.08.2010**
(21) Anmeldenummer: 07717688.1
(22) Anmeldetag: 05.01.2007
(51) Int. Cl.: B60N 2/30

(54) **KRAFTFAHRZEUGSITZ MIT EINER KOPPLUNG ZWISCHEN DER RÜCKENLEHNEN- UND DER SITZTEILBEWEGUNG UND KRAFTFAHRZEUG MIT EINEM SOLCHEN KRAFTFAHRZEUGSITZ**
MOTOR VEHICLE SEAT FEATURING COUPLING BETWEEN THE BACKREST MOVEMENT AND THE SEAT PART MOVEMENT, AND MOTOR VEHICLE COMPRISING SUCH A MOTOR VEHICLE SEAT
SIEGE DE VEHICULE A MOTEUR DONT LE DEPLACEMENT DU DOSSIER EST COUPLE AU DEPLACEMENT DE LA PARTIE ASSISE ET VEHICULE A MOTEUR EQUIPE D'UN TEL SIEGE

(30) Priorität: 05.01.2006 DE 102006001013
(43) Veröffentlichungstag der Anmeldung: 17.09.2008
(73) Patentinhaber: Magna Seating (Germany) GmbH, 63877 Sailauf (DE)
(72) Erfinder: VENTURA, Kevin, 75015 Paris (FR); WINKELHAKE, Bernd, 38518 Gifhorn (DE)
(74) Vertreter: Völger, Silke Beatrix
(86) Internationale Anmeldenummer: PCT/EP2007/000056
(87) Internationale Veröffentlichungsnummer: WO 2007/077222

(56) Entgegenhaltungen:
- EP-A- 1 375 242
- EP-A- 1 535 792
- DE-C1- 19 957 380
- US-A- 3 311 405

## Beschreibung

Die vorliegende Erfindung betrifft einen Kraftfahrzeugsitz, bei dem die Bewegung der Rückenlehne mit der Bewegung des Sitzteils gekoppelt ist, sowie ein Kraftfahrzeug mit einem solchen Kraftfahrzeugsitz.

Aus dem Stand der Technik sind insbesondere Kraftfahrzeugrücksitze bekannt, die eine Rückenlehne und ein Sitzteil umfassen. Um den Gepäckraum hinter den Kraftfahrzeugrücksitzen zu vergrößern, können die Rückenlehnen der bekannten Sitze in Richtung des Sitzteils umgeklappt oder verschwenkt werden. Hierbei ist es wünschenswert, die Rückenlehne derart tief nach vorne zu klappen, dass deren Rückseite nach dem Verschwenken auf einer Ebene mit und möglichst parallel zu dem Gepäckraumboden liegt. Da die meisten Sitzteile jedoch weit nach oben hervorstehen, war es notwendig, die Sitzteile der bekannten Kraftfahrzeugrücksitze absenkbar oder vorverlagerbar zu gestalten, um auch die Rückenlehnen entsprechend tief weit verschwenken zu können.

Aus der DE 199 57 380 C1, die alle Merkmale des Oberbegriffs des Anspruchs 1 aufweist, ist ein Kraftfahrzeugrücksitz vorbekannt, bei dem die Rückenlehne zur Schaffung einer Ladefläche auf das Sitzteil klappbar ausgestaltet ist. Das Sitzteil ist im vorderen Bereich über gelenkig angeschlagene Lenker am Fahrzeugboden angebunden. Die Rückenlehne weist eine über ihre Klappachse nach unten ragende Verlängerung auf. Ein gekoppeltes Klappen der Rückenlehne und Absenken des Sitzteils wird dabei über einen die Lenker und die Verlängerung verbindenden Seilzug erzielt.

Des Weiteren beschreibt die DE 10355765 A1 einen Kraftfahrzeugrücksitz mit einer klappbaren Rückenlehne und einem absenkbaren Sitzteil, wobei die Rückenlehne in Richtung des Sitzteils geklappt werden kann. Es ist ferner ein Mechanismus vorgesehen, so dass das Sitzteil aus einer Gebrauchslage in eine vorverlagerte Position abgesenkt werden kann. Um die Bewegung der Rückenlehne mit der Bewegung des Sitzteils zu koppeln, ist ein Koppelglied vorgesehen, wobei ferner ein Verriegelungsmechanismus eingesetzt wird, mit dessen Hilfe das Sitzteil in der Gebrauchslage verriegelt werden kann. Das Koppelglied ist dabei derart ausgelegt, dass der Verriegelungsmechanismus beim Vorklappen der Rückenlehne zu dem Sitzteil erst dann entriegelt wird, wenn die Rückenlehne einen vorbestimmten Neigungswinkel einnimmt. Danach sind die Bewegungen von Rückenlehne und Sitzteil derart gekoppelt, dass das Sitzteil bei einem weitergehenden Vorklappen der Rückenlehne in die genannte abgesenkte Position bewegt wird. Das Koppelglied ist hierbei als Schub- bzw. Druckstange ausgebildet, die auf einen oder mehrere Verstellhebel des Mechanismus des Sitzteils drückt.

Der bekannte Kraftfahrzeugrücksitz hat sich bewährt, ist jedoch mit dem Nachteil behaftet, dass der der Bewegung zu Grunde liegende Mechanismus störanfällig ist und einen aufwendigen Aufbau bedingt, wobei die Handhabung des bekannten Kraftfahrzeugsitzes erschwert ist.

Es ist daher eine Aufgabe der vorliegenden Erfindung, einen Kraftfahrzeugsitz der gattungsgemäßen Art zu schaffen, der eine geringe Störanfälligkeit und einen einfachen Aufbau hat, wobei die Handhabung des Kraftfahrzeugsitzes vereinfacht sein soll. Der Erfindung liegt ferner die Aufgabe zu Grunde ein Kraftfahrzeug mit einem solchen vorteilhaften Kraftfahrzeugsitz zu schaffen.

Diese Aufgabe wird durch die in den Patentansprüchen 1 bzw. 11 angegebenen Merkmale gelöst. Vorteilhafte Ausführungsformen der Erfindung sind Gegenstand der Unteransprüche.

Der erfindungsgemäße Kraftfahrzeugsitz weist zunächst ein Sitzteil auf, das mit Hilfe eines Sitzteilmechanismus von einer Gebrauchslage in eine Nichtgebrauchslage bewegt werden kann. Unter der Gebrauchslage ist hierbei die Lage des Sitzteils zu verstehen, in der ein Fahrzeuginsasse auf dem Kraftfahrzeugsitz Platz nimmt, wohingegen unter einer Nichtgebrauchslage beispielsweise eine gegenüber der Gebrauchslage abgesenkte und/oder nach vorne versetzte Lage des Sitzteils verstanden werden kann. Es ist ferner ein Arretierungsmittel zur lösbaren Arretierung des Sitzteils in der Gebrauchslage vorgesehen, das beispielsweise an dem Sitzteilmechanismus oder dem Sitzteil selbst angreift.

Damit sich der Fahrzeuginsasse rücklings abstützen kann, weist der Kraftfahrzeugsitz ferner eine Rückenlehne auf, die mit Hilfe eines Rückenlehnenmechanismus um eine Schwenkachse in Richtung des Sitzteils geschwenkt bzw. geklappt werden kann. Die Bewegung der Rückenlehne ist über ein Kopplungselement mit der Bewegung des Sitzteils gekoppelt, wobei das Sitzteil bei einer ersten Schwenkbewegung der Rückenlehne in Richtung des Sitzteils in der Gebrauchslage arretiert ist. Bei dieser ersten Schwenkbewegung bewegt sich das Sitzteil demzufolge nicht, vielmehr kann die Rückenlehne unabhängig von dem Sitzteil bis zu einem gewissen Grad verschwenkt werden. Erst wenn die Rückenlehne im Rahmen einer weitergehenden, nachfolgenden zweiten Schwenkbewegung über eine bestimmte Stellung hinaus in Richtung des Sitzteils geklappt wird, wirkt das Kopplungselement derart mit dem Arretierungsmittel zusammen, dass die Arretierung des Sitzteils gelöst wird. Somit kann das Sitzteil bei einer noch weitergehenden dritten Schwenkbewegung der Rückenlehne in Richtung des Sitzteils durch das Kopplungselement von der Gebrauchslage in die Nichtgebrauchslage bewegt werden

Erfindungsgemäß wirkt das Kopplungselement nun derart mit dem Rückenlehnenmechanismus und dem Sitzteilmechanismus zusammen, dass das Kopplungselement eine Zugkraft auf den Sitzteilmechanismus ausübt, um das Sitzteil von der Gebrauchslage in die Nichtgebrauchslage zu bewegen.

Dies hat den Vorteil, dass an das Kopplungselement bzw. an dessen Einbindung in die Mechanik des Kraftfahrzeugsitzes wesentlich geringere Anforderungen gestellt sind, als dies bei dem Einsatz einer Schub- oder Druckstange der Fall ist, zumal ein lediglich die Zugkraft übertragendes Kopplungselement auf nahezu beliebige Art und Weise in die Sitzmechanik eingebunden werden kann. Auch ist die Störanfälligkeit bei Kopplungselementen, die lediglich Zugkräfte übertragen, geringer, da die Gefahr eines mechanischen Verklemmens der Komponenten nicht so groß ist.

In einer bevorzugten Ausführungsform des erfindungsgemäßen Kraftfahrzeugsitzes wirkt ferner das Kopplungselement derart mit dem Rückenlehnenmechanismus und dem Arretierungsmittel zusammen, dass das Kopplungselement eine Zugkraft auf das Arretierungsmittel ausübt, um die Arretierung des Sitzteils zu lösen. Bezüglich der Vorteile sei auf die vorstehenden Ausführungen verwiesen.

In einer weiteren bevorzugten Ausführungsform des erfindungsgemäßen Kraftfahrzeugsitzes ist an dem Kopplungselement ein Vorsprung vorgesehen, der derart gegen das Arretierungsmittel gezogen werden kann, dass sich die Arretierung des Sitzteils löst. Bei dem Vorsprung kann es sich beispielsweise um einen seitlichen Zapfen oder Stift an einem Teil des Kopplungselements handeln.

Um die Handhabung des Kraftfahrzeugsitzes zu vereinfachen, ist das Sitzteil in einer weiteren bevorzugten Ausführungsform der Erfindung derart in die Gebrauchslage vorgespannt, dass es entgegen der Vorspannung in die Nichtgebrauchslage bewegt werden kann und beim Zurückschwenken der Rückenlehne selbsttätig in die Gebrauchslage zurückkehrt. Auf diese Weise wird das Kopplungselement bei dem Zurückschwenkvorgang der Rückenlehne nicht - insbesondere nicht auf Schub oder Druck - belastet. Vielmehr kehrt das Sitzteil auf Grund der Vorspannung selbsttätig in die Gebrauchslage zurück. Das Kopplungselement muss daher lediglich zur Übertragung einer Zugkraft ausgelegt sein. Bei Auswahl einer geringen aber gleichermaßen ausreichenden Vorspannung wird die Bewegung des Sitzteils in die Nichtgebrauchslage nur unwesentlich erschwert und das Zurückbewegen in die Gebrauchslage erheblich vereinfacht.

In einer vorteilhaften Ausführungsform des erfindungsgemäßen Kraftfahrzeugsitzes weist der Sitzteilmechanismus ein Federelement zum Vorspannen des Sitzteils in die Gebrauchslage auf. Bei dem Federelement kann es sich beispielsweise um eine entsprechend ausgelegt Spiralfeder handeln, die einerseits an dem Sitzteilmechanismus und andererseits fahrzeugfest angeordnet ist.

In einer besonders vorteilhaften Ausführungsform des erfindungsgemäßen Kraftfahrzeugsitzes wirkt das Arretierungsmittel derart mit dem Sitzteilmechanismus zusammen, dass das Arretierungsmittel das Sitzteil selbsttätig in der Gebrauchslage arretiert, wenn das Sitzteil von der Nichtgebrauchslage wieder in die Gebrauchslage bewegt wird. So kann beispielsweise an dem Sitzteilmechanismus ein einfacher Zapfen vorgesehen sein, der das Arretierungsmittel in Form eines vorgespannten Hakens zunächst aus der Arretierungsposition verdrängt, bevor der Haken auf Grund der Vorspannung anschließend wieder in die Arretierungsposition zurückschnellt, in der er den Zapfen umgreift.

Um die Schwenkbarkeit der Rückenlehne unabhängig von dem Sitzteil bei der oben genannten ersten Schwenkbewegung zu ermöglichen, ist das Kopplungselement in einer bevorzugten Ausführungsform des erfindungsgemäßen Kraftfahrzeugsitzes an einer ersten Angriffsstelle an dem Rückenlehnenmechanismus und an einer zweiten Angriffsstelle an dem Sitzteilmechanismus festgelegt, wobei der Abstand zwischen der ersten und zweiten Angriffsstelle während der ersten Schwenkbewegung, vorzugsweise auch während der zweiten Schwenkbewegung, verändert werden kann. So kann es sich bei dem Kopplungselement beispielsweise um ein Teil handeln, das bis zu einem gewissen Grad teleskopartig verlängerbar ist. Dies ist jedoch mit einem hohen Aufwand verbunden, weshalb die nachstehende Ausführungsform bevorzugt ist.

In einer besonders bevorzugten Ausführungsform des erfindungsgemäßen Kraftfahrzeugsitzes umfasst das Kopplungselement daher eine erste Strebe, die gelenkig an der ersten Angriffsstelle an dem Rückenlehnenmechanismus festgelegt ist, und eine zweite Strebe, die gelenkig an der zweiten Angriffsstelle an dem Sitzteilmechanismus festgelegt ist, wobei die erste und zweite Strebe über ein einfaches Drehgelenk miteinander verbunden sind. Unter einem einfachen Drehgelenk ist hierbei ein Gelenk zu verstehen, das zwar eine Drehung der gelenkig verbundenen Streben zueinander, aber keine Verschiebung zulässt, wie dies bei einem DrehSchiebe-Gelenk der Fall wäre.

Um beim Vorschwenken der Rückenlehne eine Zugkraft über das Kopplungselement auf den Sitzteilmechanismus übertragen zu können, weist der Sitzteilmechanismus in einer vorteilhaften Ausführungsform des erfindungsgemäßen Kraftfahrzeugsitzes mindestens einen schwenkbaren Wipphebel auf, dessen eine Seite an dem Sitzteil befestigt ist, während an der anderen Seite das Kopplungselement festgelegt ist.

In einer weiteren vorteilhaften Ausführungsform des erfindungsgemäßen Kraftfahrzeugsitzes ist an dem Wipphebel ein Rastmittel vorgesehen, das mit dem Arretierungsmittel verrastet werden kann. Bezüglich einer möglichen beispielhaften Ausführungsform sei auf die obige Schilderung verwiesen.

Um beim Vorschwenken der Rückenlehne eine Zugkraft über das Kopplungselement auf den Sitzteilmechanismus übertragen zu können, weist der Rückenlehnenmechanismus in einer weiteren bevorzugten Ausführungsform des erfindungsgemäßen Kraftfahrzeugsitzes mindestens einen um die Schwenkachse der Rückenlehne schwenkbaren Wipphebel auf, dessen eine Seite in Richtung der Rückenlehne weist und an dieser befestigt ist, während an der anderen Seite das Kopplungselement festgelegt ist.

In einer vorteilhaften Ausführungsform des erfindungsgemäßen Kraftfahrzeugsitzes ist das Sitzteil in der Nichtgebrauchslage gegenüber der Gebrauchslage nach vorne und/oder unten versetzt angeordnet.

Das erfindungsgemäße Kraftfahrzeug weist einen Kraftfahrzeugsitz der zuvor beschriebenen Art auf, wobei der Kraftfahrzeugsitz vorzugsweise ein Kraftfahrzeugrücksitz ist.

Die Erfindung wird im Folgenden an Hand einer beispielhaften Ausführungsform unter Bezugnahme auf die beigefügten Zeichnungen näher erläutert. Darin zeigen:
- Fig. 1: eine Seitenansicht des erfindungsgemäßen Kraftfahrzeugsitzes mit einer zu- rückgeschwenkten Rückenlehne und einem Sitzteil in der Gebrauchslage,
- Fig. 2: den Kraftfahrzeugsitz von Fig. 1 mit der Rückenlehne nach einer ersten Schwenkbewegung und dem Sitzteil in der Gebrauchslage,
- Fig. 3: den Kraftfahrzeugsitz von Fig. 2 mit der Rückenlehne nach einer weitergehen- den zweiten Schwenkbewegung und dem Sitzteil in der Gebrauchslage,
- Fig.: 4 den Kraftfahrzeugsitz von Fig. 3 mit der Rückenlehne während einer noch wei- tergehenden dritten Schwenkbewegung und dem Sitzteil zwischen der Gebrauchslage und der Nichtgebrauchslage und
- Fig. 5: den Kraftfahrzeugsitz von Fig. 4 mit der Rückenlehne nach der noch weiterge- henden dritten Schwenkbewegung und dem Sitzteil in der Nichtgebrauchslage.

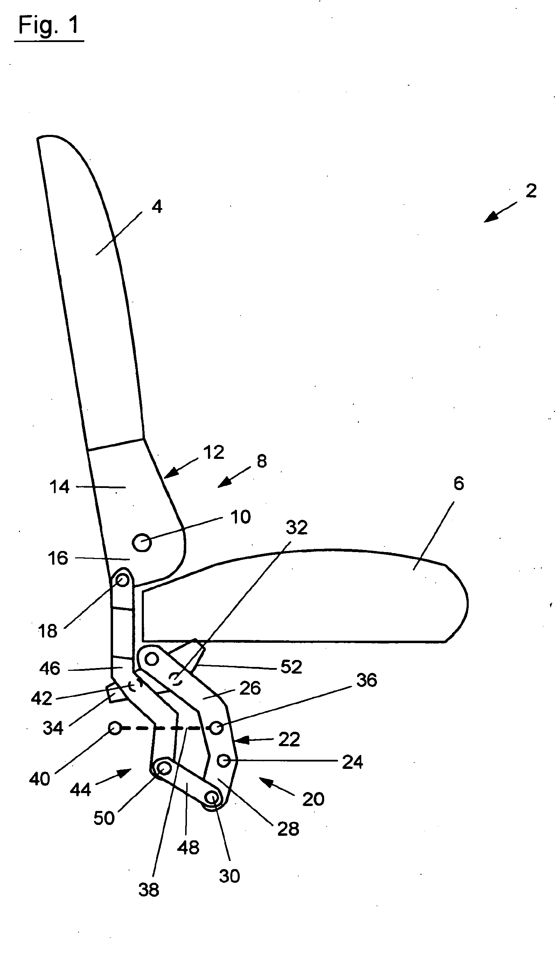

Fig. 1 zeigt eine Seitenansicht des Kraftfahrzeugsitzes 2, der vorzugsweise als Kraftfahrzeugrücksitz innerhalb eines Kraftfahrzeugs vor einem dahinter angeordneten Gepäckraum angeordnet ist. Der Kraftfahrzeugsitz 2 weist eine Rückenlehne 4 und ein Sitzteil 6 auf, wobei sowohl die Rückenlehne 4 als auch das Sitzteil 6 auf der dem (nicht dargestellten) Fahrzeuginsassen zugewandten Seite eine Polsterung aufweisen kann.

Die Rückenlehne 4 kann mit Hilfe eines Rückenlehnenmechanismus 8 um eine Schwenkachse 10 in Richtung des Sitzteils 6 verschwenkt werden, wie dies später eingehender unter Bezugnahme auf die weiteren Figuren erläutert wird. Der Rückenlehnenmechanismus 8 umfasst im Wesentlichen einen Wipphebel 12; der um die ortsfeste Schwenkachse 10 verschwenkt werden kann. Dabei weist der Wipphebel 12 eine erste Seite 14 bzw. einen ersten Hebelabschnitt auf, die in Erstreckungsrichtung der Rückenlehne 4 weist und mit dieser verbunden ist. Die zweite Seite 16 des Wipphebels 12 bzw. der zweite Hebelabschnitt, erstreckt sich auf der gegenüberliegenden Seite der Schwenkachse 10. An der zweiten Seite 16 ist dabei eine Angriffsstelle 18 für ein später eingehender zu beschreibendes Kopplungselement vorgesehen, die einen vorbestimmten Abstand zu der Schwenkachse 10 aufweist.

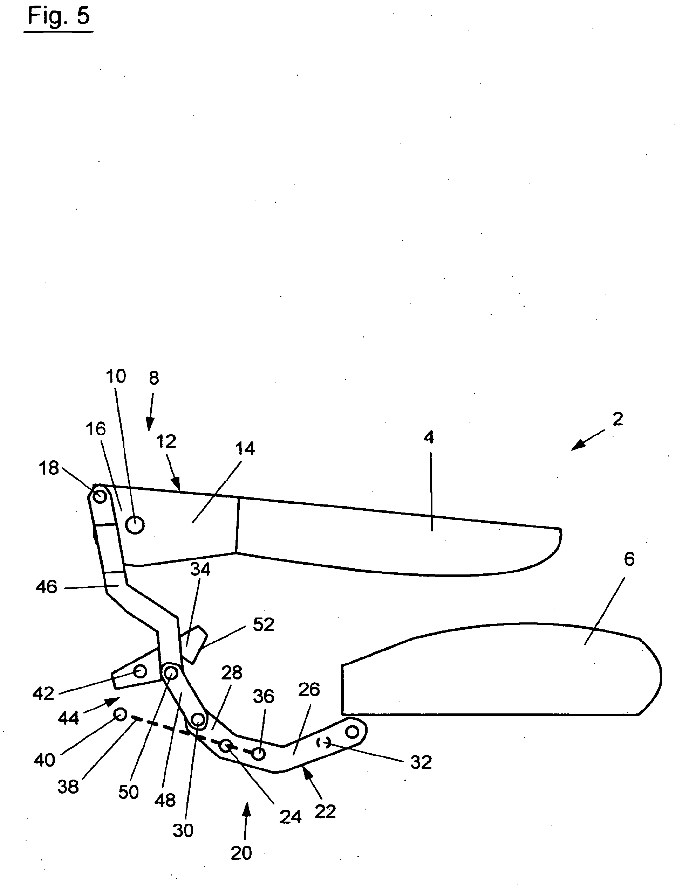

Das Sitzteil 6 kann von der in Fig. 1 dargestellten Gebrauchslage, in der der Fahrzeuginsasse auf dem Sitzteil Platz nehmen kann, in eine Nichtgebrauchslage bewegt werden, die in Fig. 5 dargestellt und in der das Sitzteil 6 gegenüber der Gebrauchslage abgesenkt und nach vorne versetzt angeordnet ist. Zu diesem Zweck ist ein Sitzteilmechanismus 20 unterhalb des Sitzteils 6 vorgesehen. Der Sitzteilmechanismus 20 besteht in der vorliegenden Ausführungsform aus mehreren Wipphebeln, die ein Absenken des Sitzteils 6 von der angehobenen Gebrauchslage in die abgesenkte und nach vorne versetzte Nichtgebrauchslage ermöglichen. Die Wipphebel können sitzteilseitig an einer Tragekonstruktion (nicht dargestellt) für das Sitzteil 6 angelenkt sein. Nachstehend wird der Sitzteilmechanismus 20 an Hand des Wipphebels 22 erläutert, der über das später zu erläuternde Kopplungselement mit dem Rückenlehnenmechanismus in Wirkverbindung steht. Der Wipphebel 22 kann um eine ortsfeste Achse 24 verschwenkt werden und weist eine erste, dem Sitzteil 6 zugewandte Seite 26 auf, deren Ende an dem Sitzteil 6 bzw. dessen Tragekonstruktion angelenkt ist. Die zweite, dem Sitzteil 6 abgewandte Seite 28 des Wipphebels 22 bzw. der zweite Hebelabschnitt, erstreckt sich auf der gegenüberliegenden Seite der Achse 24. An der zweiten Seite 28 ist dabei eine Angriffsstelle 30 für das später eingehender zu beschreibende Kopplungselement vorgesehen, die einen vorbestimmten Abstand zu der Achse 24 hat.

Auf der dem Betrachter der Figuren abgewandten Seite des Wipphebels 22 ist ein Rastmittel 32 vorgesehen, das an der ersten Seite 26 des Wipphebels 22 angebracht ist und im vorliegenden Beispiel als ein seitlich hervorstehender Zapfen ausgebildet ist. Das Rastmittel 32 kann mit dem später eingehender zu beschreibenden Arretierungsmittel 34 verrastet werden bzw. ist in Fig. 1 mit diesem verrastet. An der ersten Seite 26 des Wipphebels 22 ist ferner ein weiterer Vorsprung 36 vorgesehen, an dem ein Ende eines Federelements 38 (gestrichelte Darstellung) befestigt ist, wobei das Federelement 38 als Spiralzugfeder ausgebildet ist. Das andere Ende des Federelements 38 erstreckt sich zu einem fahrzeugfesten Anschlag 40, an dem es befestigt ist. Das Federelement 38 ist dabei derart vorgespannt, dass der Wipphebel 22 des Sitzteilmechanismus 20 und somit das Sitzteil 6 in die in Fig. 1 dargestellt Gebrauchslage vorgespannt ist.

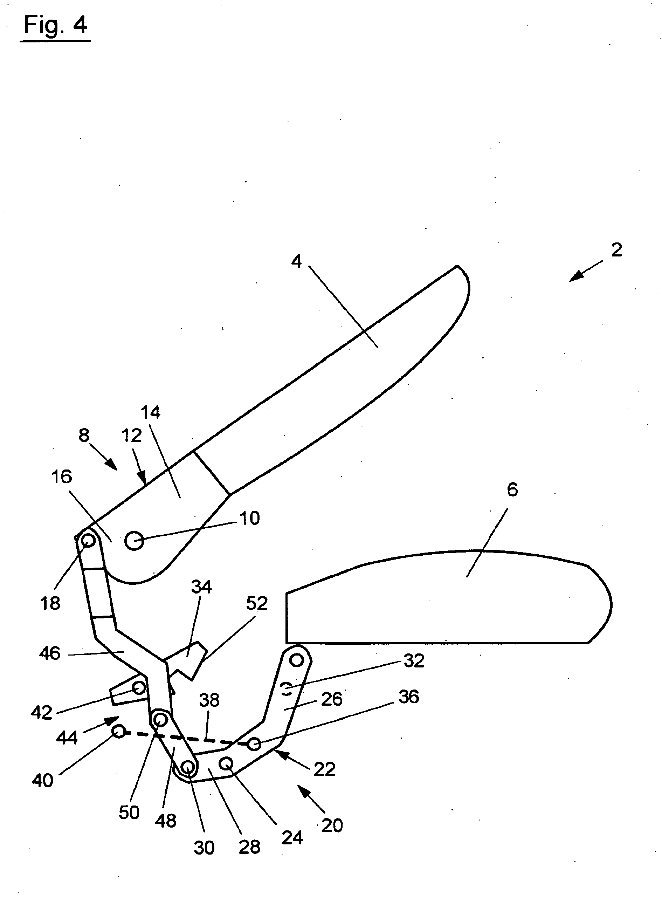

Wie bereits zuvor erwähnt, ist ferner ein Arretierungsmittel 34 vorgesehen, das im vorliegenden Beispiel als Haken (siehe insbesondere Fig. 4) ausgebildet ist, der um eine ortsfeste Achse 42 verschwenkt werden kann (gestrichelte Darstellung) und in die in Fig. 1 dargestellte Position vorgespannt ist, wobei auf die Darstellung eine Federelements o.ä. zur Vorspannung verzichtet wurde. Das hakenförmige Arretierungsmittel 34 umgreift in der Gebrauchslage des Sitzteils 6 das Rastmittel 32 des Wipphebels 22, so dass der Wipphebel 22 nicht um die Achse 24 verschwenkt werden kann. Somit arretiert das Arretierungsmittel 34 das Sitzteil 6 in dessen Gebrauchslage. Auf die weitere Funktionsweise sowie die weiteren Merkmale des Ärretierungsmittels 34 wird später eingegangen.

Die Bewegung der Rückenlehne 4 ist mit der Bewegung des Sitzteils 6 über ein Kopplungselement 44 gekoppelt. Das Kopplungselement 44 umfasst eine erste, dem Rückenlehnenmechanismus 8 zugewandte Strebe 46 und eine zweite, dem Sitzteilmechanismus 20 zugewandte Strebe 48. Die Strebe 46 ist einerseits gelenkig an der ersten Angriffsstelle 18 an der zweiten Seite 16 des Wipphebels 12 des Rückenlehnenmechanismus 8 festgelegt und andererseits über ein einfaches Drehgelenk 50 mit der zweiten Strebe 48 verbunden. Die zweite Strebe 48 ist an ihrem dem Drehgelenk 50 abgewandten Ende gelenkig an der zweiten Angriffsstelle 30 an der zweiten Seite 28 des Wipphebels 22 des Sitzteilmechanismus 20 festgelegt. Auf der dem Betrachter abgewandten Seite der ersten Strebe 46 ist ferner ein Vorsprung (nicht dargestellt) vorgesehen, der zusammen mit der ersten Strebe 46 gegen das Arretierungsmittel 34 gezogen werden kann, um dieses zu lösen, wie dies später eingehender beschrieben wird.

Nachstehend wird die Funktionsweise des Kraftfahrzeugsitzes 2 unter Bezugnahme auf die Fig. 1 bis 6 beschrieben. Möchte eine Bedienungsperson den hinter der Rückenlehne 4 angeordneten Gepäckraum vergrößern, so ist es erforderlich, die Rückenlehne 4 nach vorne zu verschwenken und das Sitzteil 6 abzusenken, so dass ein vollständiges Vorschwenken der Rückenlehne 4 möglich ist.

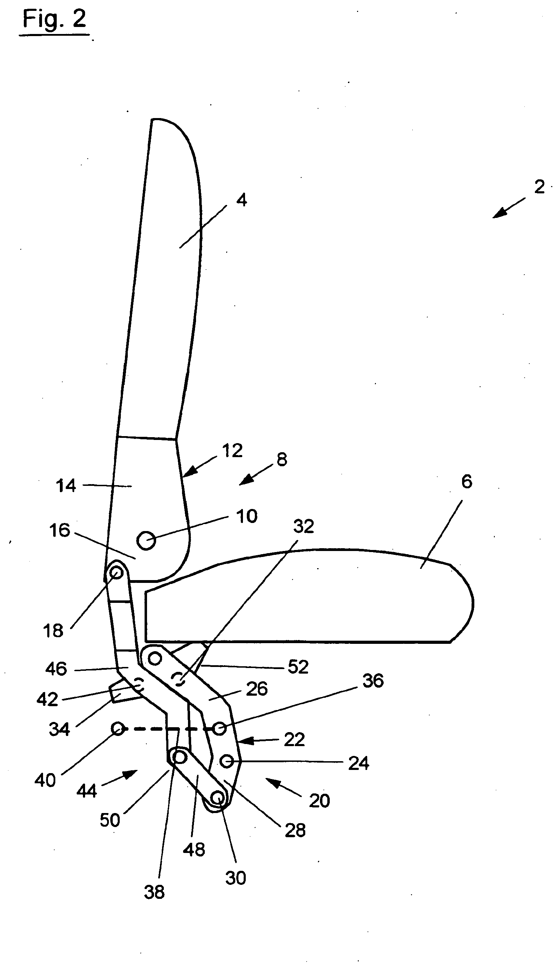

So kann zunächst eine erste Schwenkbewegung der Rückenlehne 4 um die Schwenkachse 10 in Richtung des Sitzteils 6 durchgeführt werden, bei der die Rückenlehne 4 von der in Fig. 1 gezeigten Position in die in Fig. 2 gezeigte Position gebracht wird. Das Sitzteil 6 verbleibt bei dieser ersten Schwenkbewegung in der Gebrauchslage und ist arretiert, d.h. die Bedienungsperson kann die Rückenlehne 4 bis zu einem vorbestimmten Grad verschwenken, ohne auch das Sitzteil 6 mit zu bewegen. Dies ist darauf zurückzuführen, dass der Rückenlehnenmechanismus 8 zwar eine Zugkraft auf das Kopplungselement 44 ausübt, die erste und zweite Strebe 46, 48 desselben jedoch derart lang ausgebildet sind, dass diese sich zwar hintereinander ausrichten, aber noch keine Zugkraft auf den Sitzteilmechanismus 20 übertragen können. Mit anderen Worten kann der Abstand zwischen der ersten Angriffsstelle 18 an dem Rückenlehnenmechanismus 8 und der zweiten Angriffsstelle 30 an dem Schwenkmechanismus 20 während der ersten Schwenkbewegung verändert werden, da die Streben 46, 48 entsprechend lang ausgebildet und über das einfache Drehgelenk 50 miteinander verbunden sind. Vorzugsweise soll dies auch während einer weitergehenden zweiten Schwenkbewegung der Fall sein.

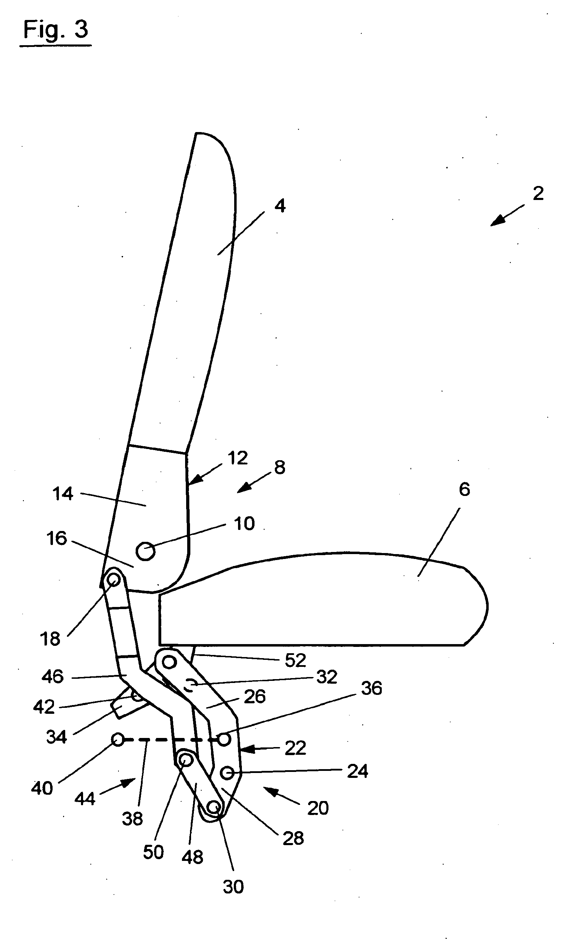

In der in Fig. 2 gezeigten Position der Rückenlehne 4 liegt der (nicht dargestellte) Vorsprung an der Strebe 46 von unten an einer (nicht dargestellten) Kulissenführung an dem hakenförmigen Arretierungsmittel 34 an. Bei einer nachfolgenden, weitergehenden zweiten Schwenkbewegung der Rückenlehne 4 in Richtung des Sitzteils 6 wird nun der Vorsprung (nicht dargestellt) weiter gegen das Arretierungsmittel 34 gezogen, so dass dieses um die Achse 42 entgegen der Vorspannung nach oben verschwenkt wird, bis das hakenförmige Arretierungsmittel 34 das zapfenförmige Rastmittel 32 an dem Wipphebel 22 des Sitzteilmechanismus 20 freigibt. Diese Position des Arretierungsmittels 34 ist in Fig. 3 gezeigt, die auch die Endstellung nach der weitergehenden zweiten Schwenkbewegung zeigt. Die Arretierung des Sitzteils 6 ist somit gelöst. Ferner sind die Streben 46, 48 des Kopplungselements 44 in Fig. 3 derart fluchtend zueinander ausgerichtet, dass die Übertragung einer Zugkraft von dem Rückenlehnenmechanismus 8 über das Kopplungselement 44 auf den Sitzteilmechanismus 20 nunmehr möglich ist.

Ausgehend von der in Fig. 3 gezeigten Position erfolgt eine noch weitergehende dritte Schwenkbewegung der Rückenlehne 4 in Richtung des Sitzteils 6. Über das Kopplungselement 44 wird nunmehr ausgehend von dem Rückenlehnenmechanismus 8 eine Zugkraft auf den Wipphebel 22 des Schwenkmechanismus 20 ausgeübt, so dass der Wipphebel 22 um die Achse 24 verschwenkt wird und das Sitzteil 6 über die in Fig. 4 gezeigte Zwischenposition von der Gebrauchslage in die in Fig. 5 gezeigte Nichtgebrauchslage nach vorne abgesenkt wird. Das Verschwenken des Wipphebels 22 erfolgt hierbei entgegen der Zugkraft des Federelements 38. Das Arretierungsmittel 34 kehrt hierbei, wie dies in Fig. 4 zu erkennen ist, wieder in seine vorgespannte Position zurück, da der Vorsprung (nicht dargestellt) an der ersten Strebe 46 nicht mehr auf die (nicht dargestellte) Kulissenführung an dem Arretierungsmittel 34 einwirkt.

Der Kraftfahrzeugsitz 2 sollte in der in Fig. 5 gezeigten Position mit anderen Arretierungsmitteln arretiert werden, bevor der vergrößerte Gepäckraum im Anschluss daran beladen wird. Dies umso mehr, da das lang gezogene Federelement 38, das als eine Zugfeder ausgebildet ist, in der gezeigten Position eine Zugkraft auf den Vorsprung 36 an dem Wipphebel 22 ausübt, die das Sitzteil 6 wieder zurück in die in Fig. 1 gezeigte Position ziehen könnte. Diese durch das Federelement 38 ausgeübte Zugkraft bewirkt jedoch, dass das Sitzteil 6 beim Zurückschwenken der Rückenlehne 6 wieder selbsttätig in die Gebrauchslage zurückkehrt, ohne dass ein Druck oder Zug über das Kopplungselement 44 ausgeübt werden müsste.

Darüber hinaus sind das Arretierungsmittel 34 und das Rastmittel 32 an dem Wipphebel 22 derart ausgebildet, dass das Arretierungsmittel 34 beim Zurückschwenken des Sitzteils 6 zunächst wieder kurz um die Achse 42 verschwenkt wird, bevor es das Rastmittel wieder hintergreift. Dies wird im vorliegenden Beispiel dadurch erreicht, dass an dem Arretierungsmittel 34 eine Schräge 52 vorgesehen ist, gegen die das zapfenförmige Rastmittel 32 drückbar ist, um das Arretierungsmittel 34 verschwenken zu können.

### Bezugszeichenliste

- Kraftfahrzeugsitz: 2
- Rückenlehne: 4
- Sitzteil: 6
- Rückenlehnenmechanismus: 8
- Schwenkachse: 10
- Wipphebel: 12
- erste Seite des Wipphebels: 14
- zweite Seite des Wipphebels: 16
- erste Angriffsstelle: 18
- Sitzteilmechanismus: 20
- Wipphebel: 22
- Achse: 24
- erste Seite des Wipphebels: 26
- zweite Seite des Wipphebels: 28
- zweite Angriffsstelle: 30
- Rastmittel: 32
- Arretierungsmittel: 34
- Vorsprung: 36
- Federelement: 38
- Anschlag: 40
- Achse: 42
- Kopplungselement: 44
- erste Strebe: 46
- zweite Strebe: 48
- einfaches Drehgelenk: 50
- Schräge: 52

## Patentansprüche

1. Kraftfahrzeugsitz (2) mit einem Sitzteil (6), das mit Hilfe eines Sitzteilmechanismus (20) von einer Gebrauchslage in eine Nichtgebrauchslage in drei Schwenkbewegungen bewegbar ist, wobei ein Arretierungsmittel (34) zur Arretierung des Sitzteils (6) in der Gebrauchslage vorgesehen ist, einer Rückenlehne (4), die mit Hilfe eines Rückenlehnenmechanismus (8) um eine Schwenkachse (10) in Richtung des Sitzteils (6) schwenkbar ist, und einem Kopplungselement (44) zum Koppeln der Bewegung der Rückenlehne (4) mit der Bewegung des Sitzteils (6), wobei das Kopplungselement (44) an einer ersten Angriffsstelle (18) an dem Rückenlehnenmechanismus (8) und an einer zweiten Angriffsstelle (30) an dem Sitzteilmechanismus (20) festgelegt ist, und wobei das Sitzteil (6) bei einer ersten Schwenkbewegung der Rückenlehne (4) in Richtung des Sitzteils (6) in der Gebrauchslage arretiert ist, und wobei das Sitzteil (6) bei einer noch weitergehenden dritten Schwenkbewegung der Rückenlehne (4) in Richtung des Sitzteils (6) durch das Kopplungselement (44) von der Gebrauchslage in die Nichtgebrauchslage bewegbar ist, und wobei das Kopplungselement (44) derart mit dem Rückenlehnenmechanismus (8) und dem Sitzteilmechanismus (20) zusammenwirkt, dass das Kopplungselement (44) eine Zugkraft auf den Sitzteilmechanismus (20) ausübt, um das Sitzteil (6) von der Gebrauchslage in die Nichtgebrauchslage zu bewegen, **dadurch gekennzeichnet, dass** die Arretierung des Sitzteils lösbar ist, und dass das Kopplungselement (44) bei einer weitergehenden zweiten, zwischen der ersten und dritten ausgeführten, Schwenkbewegung der Rückenlehne (4) in Richtung des Sitzteils (6) derart mit dem Arretierungsmittel (34) zusammenwirkt, dass die Arretierung des Sitzteils (6) gelöst wird, und wobei der Abstand zwischen der ersten und zweiten Angriffsstelle (18; 30) während der ersten Schwenkbewegung, vorzugsweise auch während der zweiten Schwenkbewegung, veränderbar ist, und wobei das Kopplungselement (44) eine erste Strebe (46), die gelenkig an der ersten Angriffsstelle (18) an dem Rückenlehnenmechanismus (8) festgelegt ist, und eine zweite Strebe (48) umfasst, die gelenkig an der zweiten Angriffsstelle (30) an dem Sitzteilmechanismus (20) festgelegt ist, wobei die erste und zweite Strebe (46; 48) über ein einfaches Drehgelenk (50) miteinander verbunden sind..

2. Kraftfahrzeugsitz (2) nach Anspruch 1, **dadurch gekennzeichnet, dass** das Kopplungselement (44) derart mit dem Rückenlehnenmechanismus (8) und dem Arretierungsmittel (34) zusammenwirkt, dass das Kopplungselement (44) eine Zugkraft auf das Arretierungsmittel (34) ausübt, um die Arretierung des Sitzteils zu lösen.

3. Kraftfahrzeugsitz (2) nach Anspruch 2, **dadurch gekennzeichnet, dass** an dem Kopplungselement (44) ein Vorsprung vorgesehen ist, der derart gegen das Arretierungsmittel (34) ziehbar ist, dass sich die Arretierung des Sitzteils (6) löst.

4. Kraftfahrzeugsitz (2) nach einem der vorangehenden Ansprüche, **dadurch gekennzeichnet, dass** das Sitzteil (6) derart in die Gebrauchslage vorgespannt ist, dass es entgegen der Vorspannung in die Nichtgebrauchslage bewegbar ist und beim Zurückschwenken der Rückenlehne (4) selbsttätig in die Gebrauchslage zurückkehrt.

5. Kraftfahrzeugsitz (2) nach Anspruch 4, **dadurch gekennzeichnet, dass** der Sitzteilmechanismus (20) ein Federelement (38) zum Vorspannen des Sitzteils (6) in die Gebrauchslage aufweist.

6. Kraftfahrzeugsitz (2) nach einem der vorangehenden Ansprüche, **dadurch gekennzeichnet, dass** das Arretierungsmittel (34) derart mit dem Sitzteilmechanismus (20) zusammenwirkt, dass das Arretierungsmittel (34) das Sitzteil (6) selbsttätig in der Gebrauchslage arretiert, wenn das Sitzteil (6) von der Nichtgebrauchslage wieder in die Gebrauchslage bewegt wird.

7. Kraftfahrzeugsitz (2) nach einem der vorangehenden Ansprüche, **dadurch gekennzeichnet, dass** der Sitzteilmechanismus (20) mindestens einen schwenkbaren Wipphebel (22) aufweist, dessen eine Seite (26) an dem Sitzteil (6) befestigt ist, während an der anderen Seite (28) das Kopplungselement (44) festgelegt ist.

8. Kraftfahrzeugsitz (2) nach einem der vorangehenden Ansprüche, **dadurch gekennzeichnet, dass** an dem Wipphebel (22) ein Rastmittel (32) vorgesehen ist, das mit dem Arretierungsmittel (34) verrastbar ist.

9. Kraftfahrzeugsitz nach einem der vorangehenden Ansprüche, **dadurch gekennzeichnet, dass** der Rückenlehnenmechanismus (8) mindestens einen um die Schwenkachse (10) schwenkbaren Wipphebel (12) aufweist, dessen eine Seite (14) in Richtung der Rückenlehne (4) weist und an dieser befestigt ist, während an der anderen Seite (16) das Kopplungselement festgelegt ist.

10. Kraftfahrzeugsitz (2) nach einem der vorangehenden Ansprüche, **dadurch gekennzeichnet, dass** das Sitzteil (6) in der Nichtgebrauchslage gegenüber der Gebrauchslage nach vorne und/oder unten versetzt angeordnet ist.

11. Kraftfahrzeug mit einem Kraftfahrzeugsitz (2) nach einem der vorangehenden Ansprüche.

12. Kraftfahrzeug nach Anspruch 11, **dadurch gekennzeichnet, dass** der Kraftfahrzeugsitz (2) ein Kraftfahrzeugrücksitz ist.

## Claims

1. Motor vehicle seat (2) comprising a seat part (6), which may be moved by means of a seat part mechanism (20) from an operating position into a non-operating position in three swivelling movements, a locking means (34) being provided for the locking of the seat part (6) in the operating position, a backrest (4), which may be swiveled by means of a backrest mechanism (8) about a swivel pin (10) in the direction of the seat part (6), and a coupling element (44) for coupling the movement of the backrest (4) to the movement of the seat part (6), the coupling element (44) being secured at a first contact point (18) to the backrest mechanism (8) and at a second contact point (30) to the seat part mechanism (20), and the seat part (6) being locked in the operating position during a first swiveling movement of the backrest (4) in the direction of the seat part (6), and the seat part (6) being able to be moved during an even more extensive third swiveling movement of the backrest (4) in the direction of the seat part (6) by the coupling element (44) from the operating position into the non-operating position, and the coupling element (44) cooperating with the backrest mechanism (8) and the seat part mechanism (20) such that the coupling element (44) exerts a tensile force on the seat part mechanism (20), in order to move the seat part (6) from the operating position into the non-operating position, **characterized in that** the locking of the seat part is releasable, and **in that** the coupling element (44) in a more extensive second swiveling movement, carried out between the first and third swivelling movements, of the backrest (4) in the direction of the seat part (6) cooperates with the locking means (34), such that the locking of the seat part (6) is released and the distance between the first and second contact point (18; 30) being able to be altered during the first swiveling movement, preferably also during the second swiveling movement, and the coupling element (44) comprising a first strut (46) which is secured in an articulated manner at the first contact point (18) to the backrest mechanism (8), and a second strut (48) which is secured in an articulated manner at the second contact point (30) to the seat part mechanism (20), the first and the second struts (46; 48) being connected to one another via a simple pivot (50).

2. Motor vehicle seat (2) according to Claim 1, **characterized in that** the coupling element (44) cooperates with the backrest mechanism (8) and the locking means (34) such that the coupling element (44) exerts a tensile force on the locking means (34) in order to release the locking of the seat part.

3. Motor vehicle seat (2) according to Claim 2, **characterized in that** a projection is provided on the coupling element (44) which may be pulled against the locking means (34) such that the locking of the seat part (6) is released.

4. Motor vehicle seat (2) according to one of the preceding claims, **characterized in that** the seat part (6) is pretensioned into the operating position, such that it may be moved counter to the pretensioning into the non-operating position and when the backrest (4) is swiveled back automatically returns into the operating position.

5. Motor vehicle seat (2) according to Claim 4, **characterized in that** the seat part mechanism (20) comprises a spring element (38) for pretensioning the seat part (6) into the operating position.

6. Motor vehicle seat (2) according to one of the preceding claims, **characterized in that** the locking means (34) cooperate with the seat part mechanism (20) such that the locking means (34) automatically lock the seat part (6) in the operating position when the seat part (6) is moved from the non-operating position again into the operating position.

7. Motor vehicle seat (2) according to one of the preceding claims, **characterized in that** the seat part mechanism (20) comprises at least one swivelable rocker lever (22), one side (26) thereof being fastened to the seat part (6), whilst the coupling element (44) is secured to the other side (28).

8. Motor vehicle seat (2) according to one of the preceding claims, **characterized in that** on the rocker lever (22) a latching means (32) is provided which may be latched to the locking means (34).

9. Motor vehicle seat according to one of the preceding claims, **characterized in that** the backrest mechanism (8) comprises at least one rocker lever (12) which may be swiveled about the swivel pin (10), one side thereof (14) facing in the direction of the backrest (4) and being secured thereto, whilst the coupling element is secured to the other side (16).

10. Motor vehicle seat (2) according to one of the preceding claims, **characterized in that** the seat part (6) in the non-operating position is arranged displaced to the front and/or downward relative to the operating position.

11. Motor vehicle comprising a motor vehicle seat (2) according to one of the preceding claims.

12. Motor vehicle according to Claim 11, **characterized in that** the motor vehicle seat (2) is a motor vehicle rear seat.

## Revendications

1. Siège de véhicule automobile (2) comprenant une partie d'assise (6), qui peut être déplacée à l'aide d'un mécanisme de partie d'assise (20) d'une position d'utilisation dans une position de non utilisation en trois mouvements de pivotement, un moyen de blocage (34) pour bloquer la partie d'assise (6) dans la position d'utilisation étant prévu, un dossier (4), qui peut pivoter à l'aide d'un mécanisme de dossier (8) autour d'un axe de pivotement (10) dans la direction de la partie d'assise (6), et un élément d'accouplement (44) pour accoupler le mouvement du dossier (4) au mouvement de la partie d'assise (6), l'élément d'accouplement (44) étant fixé en un premier point d'engagement (18) au mécanisme de dossier (8) et en un deuxième point d'engagement (30) au mécanisme de partie d'assise (20), et la partie d'assise (6), lors d'un premier mouvement de pivotement du dossier (4) dans la direction de la partie d'assise (6), étant bloquée dans la position d'utilisation, et la partie d'assise (6), lors d'un troisième mouvement de pivotement poursuivi du dossier (4) dans la direction de la partie d'assise (6), pouvant être déplacée par l'élément d'accouplement (44) de la position d'utilisation dans la position de non utilisation, et l'élément d'accouplement (44) coopérant avec le mécanisme de dossier (8) et le mécanisme de la partie d'assise (20) de telle sorte que l'élément d'accouplement (44) exerce une force de traction sur le mécanisme de partie d'assise (20), afin de déplacer la partie d'assise (6) de la position d'utilisation dans la position de non utilisation, **caractérisé en ce que** le blocage de la partie d'assise peut être libéré, et **en ce que** l'élément d'accouplement (44), lors d'un deuxième mouvement de pivotement poursuivi du dossier (4), réalisé entre le premier et le troisième mouvement de pivotement, dans la direction de la partie d'assise (6), coopère avec le moyen de blocage (34) de telle sorte que le blocage de la partie d'assise (6) soit libéré et la distance entre le premier et le deuxième point d'engagement (18 ; 30) pouvant être modifiée pendant le premier mouvement de pivotement, de préférence aussi pendant le deuxième mouvement de pivotement, et l'élément d'accouplement (44) comprenant un premier montant (46), qui est fixé de manière articulée au niveau du premier point d'engagement (18) au mécanisme de dossier (8), et un deuxième montant (48) qui est fixé de manière articulée au niveau du deuxième point d'engagement (30) au mécanisme de partie d'assise (20), le premier et le deuxième montant (46 ; 48) étant connectés l'un à l'autre par le biais d'une articulation pivotante simple (50).

2. Siège de véhicule automobile (2) selon la revendication 1, **caractérisé en ce que** l'élément d'accouplement (44) coopère avec le mécanisme de dossier (8) et le moyen de blocage (34) de telle sorte que l'élément d'accouplement (44) exerce une force de traction sur le moyen de blocage (34), afin de libérer le blocage de la partie d'assise.

3. Siège de véhicule automobile (2) selon la revendication 2, **caractérisé en ce que** l'on prévoit sur l'élément d'accouplement (44) une saillie qui peut être tirée contre le moyen de blocage (34) de telle sorte que le blocage de la partie d'assise (6) soit libéré.

4. Siège de véhicule automobile (2) selon l'une quelconque des revendications précédentes, **caractérisé en ce que** la partie d'assise (6) est précontrainte dans la position d'utilisation de telle sorte qu'elle puisse être déplacée à l'encontre de la précontrainte dans la position de non utilisation et qu'elle revienne automatiquement dans la position d'utilisation lors du pivotement du dossier (4).

5. Siège de véhicule automobile (2) selon la revendication 4, **caractérisé en ce que** le mécanisme de partie d'assise (20) présente un élément de ressort (38) pour précontraindre la partie d'assise (6) dans la position d'utilisation.

6. Siège de véhicule automobile (2) selon l'une quelconque des revendications précédentes, **caractérisé en ce que** le moyen de blocage (34) coopère avec le mécanisme de partie d'assise (20) de telle sorte que le moyen de blocage (34) bloque la partie d'assise (6) automatiquement dans la position d'utilisation lorsque la partie d'assise (6) est déplacée de la position de non utilisation à nouveau dans la position d'utilisation.

7. Siège de véhicule automobile (2) selon l'une quelconque des revendications précédentes, **caractérisé en ce que** le mécanisme de partie d'assise (20) présente au moins un levier basculant pivotant (22) dont un côté (26) est fixé à la partie d'assise (6), tandis que l'élément d'accouplement (44) est fixé à l'autre côté (28).

8. Siège de véhicule automobile (2) selon l'une quelconque des revendications précédentes, **caractérisé en ce que** l'on prévoit sur le levier basculant (22) un moyen d'encliquetage (32) qui peut être encliqueté au moyen de blocage (34).

9. Siège de véhicule automobile selon l'une quelconque des revendications précédentes, **caractérisé en ce que** le mécanisme de dossier (8) présente au moins un levier basculant (12) pouvant pivoter autour de l'axe de pivotement (10), dont un côté (14) est tourné dans la direction du dossier (4) et est fixé à celui-ci, tandis que l'élément d'accouplement est fixé à l'autre côté (16).

10. Siège de véhicule (2) selon l'une quelconque des revendications précédentes, **caractérisé en ce que** la partie de siège (6) est disposée dans la position de non utilisation par rapport à la position d'utilisation, de manière décalée vers l'avant et/ou vers le bas.

11. Véhicule automobile comprenant un siège de véhicule automobile (2) selon l'une quelconque des revendications précédentes.

12. Véhicule automobile selon la revendication 11, **caractérisé en ce que** le siège de véhicule automobile (2) est un siège arrière de véhicule automobile.
